# EUROPÄISCHE PATENTSCHRIFT

(11) **EP 2 916 093 B1**
(45) Veröffentlichungstag und Bekanntmachung des Hinweises auf die Patenterteilung: **22.08.2018**
(21) Anmeldenummer: 15450009.4
(22) Anmeldetag: 05.03.2015
(51) Int. Cl.: F28F 9/00, F16B 5/02, F16B 37/06

(54) **Verfahren zur Befestigung eines mit Seitenblechen versehenen Wärmetauschers**
Method for fastening a heat exchanger with side plates
Procédé de fixation d'un échangeur de chaleur doté de tôles latérales

(30) Priorität: 06.03.2014 AT 1602014
(43) Veröffentlichungstag der Anmeldung: 09.09.2015
(73) Patentinhaber: Vossloh Kiepe Ges.m.b.H., 1210 Österreich (AT)
(72) Erfinder: Benner, Gunnar, 3481 Fels am Wagram (AT); Kalchhauser, Christian, 1220 Wien (AT)
(74) Vertreter: Rippel, Andreas

(56) Entgegenhaltungen:
- DE-A1- 10 126 747
- DE-A1-102004 053 851
- DE-U1-202012 008 057
- GB-A- 536 553
- US-A- 3 257 889

## Beschreibung

Die Erfindung bezieht sich auf ein Verfahren zur Befestigung eines mit Seitenblechen versehenen Wärmetauschers mittels Blindnietmuttern und Schrauben an einer mit Bohrungen zum Durchstecken der Schrauben versehenen Trennwand.

Bei derartigen bekannten Verfahren bzw. Anordnungen werden die Blindnietmuttern in die Seitenbleche des Wärmetauschers eingenietet und der Wärmetauseher wird an einer Trennwand mit Schrauben und Scheiben befestigt.

Ein solches Verfahren bzw. eine solche Anordnung wird in DE102004053851 A1 offenbart. Damit eine Befestigung ohne Schwierigkeiten möglich ist, muß die Bohrung in der Trennwand kleiner sein als der größte Außendurchmesser der Blindnietmutter. Dies erfordert, daß der Wärmetauscher mit sehr engen Toleranzen gefertigt werden muß, was hohe Fertigungskosten zu Folge hat.

Werden die Wärmetauscher im Hinblick auf eine günstige Fertigung mit ausreichend großen Toleranzen gefertigt, müssen die Bohrungen in der Trennwand so weit vergrößert werden, daß sie deutlich größer sind als der Außendurchmesser der Blindnietmuttern. Dies hat zur Folge, daß sich die Blindnietmutter an der Kopfseite nicht mehr abstützen kann und dadurch sehr leicht aus dem Seitenblech des Wärmetauschers ausknöpft. Insbesondere unter dynamischer Belastung ist dies sehr leicht möglich.

Die Erfindung hat es sich zum Ziel gesetzt, ein Verfahren der eingangs genannten Art zu schaffen, bei der eine günstige Fertigung der Wärmetauscher möglich ist, trotzdem ein Ausknöpfen der Blindnietmuttern nicht mehr stattfinden kann.

Erreicht wird dieses der Erfindung zugrundeliegende Ziel dadurch, daß die Bohrungen der Trennwand mit einem Durchmesser hergestellt werden, der größer als der Außendurchmesser der Blindnietmuttern ist und daß ein Blechstreifen oder dgl. hergestellt wird, der das gleiche Bohrbild wie das Seitenblech aufweist, aber mit Bohrungsdurchmessern kleiner als der Außendurchmesser der Blindnietmuttern versehen ist, und daß der Blechstreifen mit dem Seitenblech verbunden wird, wonach Trennwand, Seitenblech und Blechstreifen mittels der Blindnietmuttern und der Schrauben derart miteinander verschraubt werden, daß die Blindnietmuttern kopfseitig sich am Blechstreifen oder am Seitenblech abstützen. Bei einer bevorzugten Ausführungsform der Erfindung sind die Blindnietmuttern in das Seitenblech genietet und ist der Blechstreifen zwischen dem Seitenblech und der Trennwand angeordnet.

Es ist aber im Rahmen der Erfindung auch möglich, daß die Blindnietmuttern in den Blechstreifen genietet sind, der hinter dem Seitenblech angeordnet ist. Nachstehend ist die Erfindung anhand eines in den Zeichnungen dargestellten Ausführungsbeispieles näher beschrieben, ohne auf dieses Beispiel beschränkt zu sein.

Dabei zeigen:
Fig. 1 in schaubildlicher Ansicht die zu verbindenden Teile vor ihrer Montage;
Fig. 2 in vergrößertem Maßstab einen Teilschnitt in Richtung des Pfeiles II in Fig. 1;
Fig.3 einen Schnitt A-A gemäß Fig. 2;
Fig. 4 in nochmals vergrößerter Darstellung das Detail Z in Fig. 3.

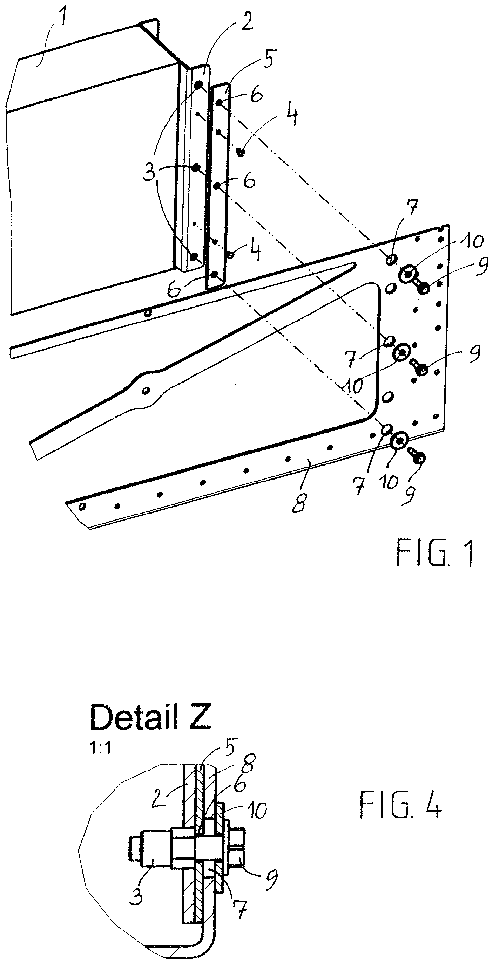

Gemäß den Zeichnungen ist ein Wärmetauseher 1, von dem in Fig. 1 nur die eine Seite gezeigt ist, mit Seitenblechen 2 versehen. Die Seitenbleche 2 haben Bohrungen, in die Blindnietmuttern 3 eingenietet sind.

Mit den Seitenblechen 2 sind mittels Blindnieten 4 Blechstreifen 5 verbunden, die Bohrungen 6 aufweisen, deren Durchmesser kleiner als der größte Außendurchmesser der Blindnietmuttern 3 ist.

Die Bohrungen 6 sind entsprechend dem gleichen Bohrbild wie Bohrungen 7 auf einer Trennwand 8 angeordnet. Die Bohrungen 7 haben jedoch einen größeren Durchmesser als der Außendurchmesser der Blindnietmuttern 3. Der Wärmetauscher 1 wird mittels in die Blindnietmuttern 3 eingeschraubten Schrauben 9 und Abdeckscheiben 10 an der Trennwand 8 befestigt.

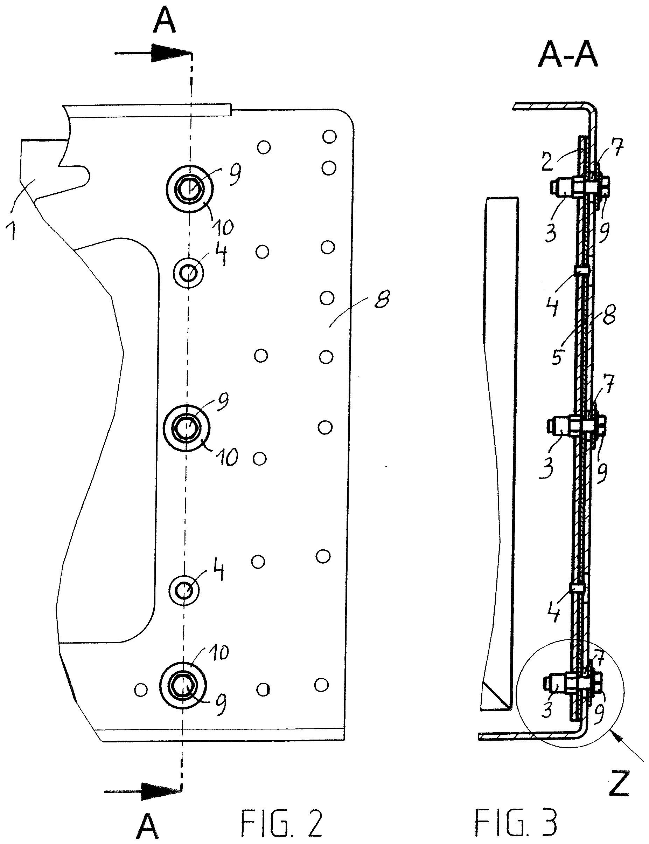

Wie insbesondere aus den Fig. 3 und 4 ersichtlich ist, kann die Blindnietmutter 3 nicht ausknöpfen, weil sie sich am Blechstreifen 5 abstützt.

Im Rahmen der Erfindung sind zahlreiche Abänderungen möglich. Insbesondere können, wie eingangs bereits ausgeführt wurde, die Blindnietmuttern 3 in den Blechstreifen 5 eingenietet werden, wobei der Blechstreifen 5 dann hinter dem Seitenblech 2 angeordnet ist.

## Patentansprüche

1. Verfahren zur Befestigung eines mit Seitenblechen (2) versehenen Wärmetauschers (1) mittels Blindnietmuttern (3) und Schrauben (9) an einer mit Bohrungen (7) zum Durchstecken der Schrauben (9) versehenen Trennwand (8), **dadurch gekennzeichnet, daß** die Bohrungen (7) der Trennwand (8) mit einem Durchmesser hergestellt werden, der größer als der Außendurchmesser der Blindnietmuttern (3) ist und daß ein Blechstreifen (5) hergestellt wird, der das gleiche Bohrbild wie das Seitenblech (2) aufweist, aber mit Bohrungsdurchmessern kleiner als der Außendurchmesser der Blindnietmuttern (3), versehen ist, und daß der Blechstreifen (5) mit dem Seitenblech (2) verbunden wird, wonach Trennwand (8), Seitenblech (2) und Blechstreifen (5) mittels der Blindnietmuttern (3) und der Schrauben (9) derart miteinander verschraubt werden, daß die Blindnietmuttern (3) kopfseitig sich am Blechstreifen (5) oder am Seitenblech (2) abstützen.

2. Anordnung, hergestellt nach dem Verfahren nach Anspruch 1, **dadurch gekennzeichnet, daß**, wenn die Blindnietmuttern (3) kopfseitig sich am Blechstreifen (5) abstützen, die Blindnietmuttern (3) in das Seitenblech (2) genietet sind und der Blechstreifen (5) zwischen dem Seitenblech (2) und der Trennwand (8) angeordnet ist.

3. Anordnung hergestellt nach dem Verfahren nach Anspruch 1, **dadurch gekennzeichnet, daß**, wenn die Blindnietmuttern (3) kopfseitig sich am Seitenblech (2) abstützen, die Blindnietmuttern (3) in den Blechstreifen (5) genietet sind, der hinter dem Seitenblech (2) angeordnet ist.

## Claims

1. Method of fastening a heat exchanger (1) provided with side plates (2) by means of blind rivet nuts (3) and screws (9) to a partition wall (8) provided with drilled holes (7) through which the screws (9) are applied, **characterised in that** the drilled holes (7) of the partition wall (8) are produced with a diameter that is larger than the outer diameter of the blind rivet nuts (3) and **in that** a metal strip (5) is produced which has the same drilling pattern as the side plate (2), but with drilled hole diameters smaller than the outer diameters of the blind rivet nuts (3) and **in that** the metal strip (5) is connected to the side plate (2), wherein the partition wall (8), side plate (2) and metal strip (5) are screwed to each other by means of the blind rivet nuts (3) and the screws (9) in such a way that on the head side the blind rivet nuts (3) support themselves on the metal strip (5) or on the side plate (2).

2. Device produced in accordance with the method according to claim 1 **characterised in that** when the blind rivet nuts (3) support themselves on the head side on the metal strip (5), the blind rivet nuts (3) are riveted in the side plate (2) and the metal strip (5) is arranged between the side plate (2) and the partition wall (8).

3. Device produced in accordance with the method according to claim1 **characterised in that** when the blind rivet nuts (3) support themselves on the head side on the side plate (2), the blind rivet nuts (3) are riveted in the metal strip (5) which is arranged behind the side plate (2).

## Revendications

1. Procédé de fixation d'un échangeur de chaleur (1) doté de tôles latérales (2) au moyen d'écrous à rivet aveugle (3) et de vis (9) sur une paroi de séparation (8) dotée de trous (7) pour faire passer les vis (9), **caractérisé en ce que** les trous (7) de la paroi de séparation (8) sont réalisés avec un diamètre qui est plus grand que le diamètre extérieur des écrous à rivet aveugle (3) et **en ce qu'**une bande de tôle (5) est réalisée qui comporte le même schéma de perçage que la tôle latérale (2), mais est dotée de diamètres de perçage plus petits que le diamètre extérieur des écrous à rivet aveugle (3) et **en ce que** la bande de tôle (5) est reliée à la tôle latérale (2), la paroi de séparation (8), la tôle latérale (2) et la bande de tôle (5) étant vissées l'une à l'autre au moyen des écrous à rivet aveugle (3) et des vis (9) de telle sorte que les écrous à rivet aveugle (3) s'appuient du côté tête sur la bande de tôle (5) ou sur la tôle latérale (2).

2. Montage réalisé d'après le procédé selon la revendication 1, **caractérisé en ce que** lorsque les écrous à rivet aveugle (3) s'appuient côté tête sur la bande de tôle (5), les écrous à rivet aveugle (3) sont rivetés dans la tôle latérale (2) et la bande de tôle (5) est disposée entre la tôle latérale (2) et la paroi de séparation (8).

3. Montage réalisé d'après le procédé selon la revendication 1, **caractérisé en ce que** lorsque les écrous à rivet aveugle (3) s'appuient côté tête sur la tôle latérale (2), les écrous à rivet aveugle (3) sont rivetés dans la bande de tôle (5) qui est disposée derrière la tôle latérale (2).
